# EUROPEAN PATENT APPLICATION

(11) **EP 4 195 569 A1**
(43) Date of publication of application: **14.06.2023**
(21) Application number: 21854367.6
(22) Date of filing: 04.08.2021
(51) Int. Cl.: H04L 5/00

(54) **METHOD FOR CONFIRMING CONTROL CHANNEL ELEMENT (CCE) INDEX, AND RELATED PRODUCT**

(30) Priority: 07.08.2020 CN 202010793429
(71) Applicant: Spreadtrum Communications (Shanghai) Co., Ltd., Shanghai 201203 (CN)
(72) Inventor: ZHOU, Huayu, Shanghai 201203 (CN); LEI, Zhenzhu, Shanghai 201203 (CN); ZHAO, Sicong, Shanghai 201203 (CN); PAN, Zhengang, Shanghai 201203 (CN)
(74) Representative: Mewburn Ellis LLP
(86) International application number: PCT/CN2021/110534
(87) International publication number: WO 2022/028476

(57) **Abstract**

A method for determining a control channel element (CCE) index and related products are provided. The method includes determining a CCE index of a physical downlink control channel (PDCCH) candidate. By means of technical solutions provided in the present disclosure, the coverage of the PDCCH can be expanded.

## Description

### TECHNICAL FIELD

This disclosure relates to the field of communication processing technology, and in particular, to a method for determining a control channel element (CCE) index and related products.

### BACKGROUND

The internet of things (IOT) refers to collecting, in real time, any object or process that needs to be monitored, connected, and interacted through various devices and technologies such as various information sensors, radio frequency identification (RFID) technologies, the global positioning system (GPS), infrared sensors, and laser scanners, so as to collect various information required, such as sound, light, heat, electricity, mechanics, chemistry, biology, and positions, of said any object or process. Through various possible network access, a universal connection among things and a universal connection among things and people can be realized, so as to realize intelligent perception, identification, and management of things and processes.

In a 5G new radio (NR) IOT scenario, coverage of a physical downlink control channel (PDCCH) may be reduced for the following reasons: the number of receive antennas of an IOT LTE decreases, which causes a diversity gain of a receive antenna of the PDCCH to decrease; the efficiency of receive antennas of the IOT UE decreases, for example, the size of the antenna decreases, which causes a gain of the receive antennas of the PDCCH to decrease; and the bandwidth of the IOT UE decreases, which causes a frequency diversity gain of the PDCCH to decrease and an aggregation level of the PDCCH to be limited. Therefore, the coverage of the PDCCH needs to be restored.

### SUMMARY

Disclosed herein are implementations of a method for determining a control channel element (CCE) index and related products, which can expand a coverage of a PDCCH by increasing a number of CCEs in a CCE index.

In a first aspect, a method for determining a CCE index is provided. The method includes determining a CCE index of a physical downlink control channel (PDCCH) candidate.

In a second aspect, a user equipment (LTE) configured to determine a CCE index of a PDCCH candidate is provided.

In a third aspect, a terminal is provided. The terminal includes a processor, a memory, a communication interface, and one or more programs. The one or more programs are stored in the memory and configured to be executed by the processor, and the one or more programs include instructions for executing the method as described in the first aspect.

In a fourth aspect of implementations of the present disclosure, a computer-readable storage medium is provided. The computer-readable storage medium is configured to store a computer program for electronic data interchange (EDI), where the computer program is operable with a computer to execute the method as described in the first aspect.

In a fifth aspect of implementations of the present disclosure, a computer program product including a non-transitory computer-readable storage medium configured to store a computer program, the computer program is operable with a computer to implement some or all of operations as described in the first aspect of implementations of the present disclosure. The computer program product may be a software installation package.

In a sixth aspect of implementations of the present disclosure, a chip system is provided. The chip system includes at least one processor, a memory, and an interface circuit. The memory, the transceiver, and the at least one processor are interconnected through a line. The at least one memory is configured to store a computer program. The computer program, when executed by the at least one processor, is operable with the at least one processor to implement the method as described in the first aspect.

By means of implementations of the present disclosure, the number of CCEs can be increased with the aid of technical solutions provided in the present disclosure, thereby expanding a coverage area of a PDCCH and improving network performance.

### BRIEF DESCRIPTION OF THE DRAWINGS

The accompanying drawings used in implementations of the present disclosure will be introduced below.
FIG. 1 is a system architecture diagram of an exemplary communication system provided by implementations of the present disclosure.
FIG. 2 is a schematic flowchart of a method for determining a CCE index provided by implementations of the present disclosure.
FIG. 3 is a schematic structural diagram of a chip system provided by a first implementation of the present disclosure.
FIG. 4 is a schematic structural diagram of a terminal provided by implementations of the present disclosure.

### DETAILED DESCRIPTION

Implementations of the present disclosure will be described below with reference to the accompanying drawings in implementations of the present disclosure.

The term "and/or" in the present disclosure merely is simply an illustration of an association relationship between associated objects, indicating that three relationships can exist. For example, A and/or B can indicate the existence of A alone, A and B together, and B alone. In addition, the character "/" in this disclosure generally indicates that associated objects are in an "or" relationship.

The expression "a plurality of" or "multiple" in implementations of the present disclosure refers to two or more. The expressions such as first and second in implementations of the present disclosure are only used for illustrating and differentiating objects described, and have no order, and do not represent a particular limitation to the number of devices in implementations of the present disclosure, which cannot constitute any limitation to implementations of the present disclosure. The term "connected" in implementations of the present disclosure refers to various connection manners, such as direct connection or indirect connection, so as to implement communication between devices, which are not limited in the implementations of the present disclosure.

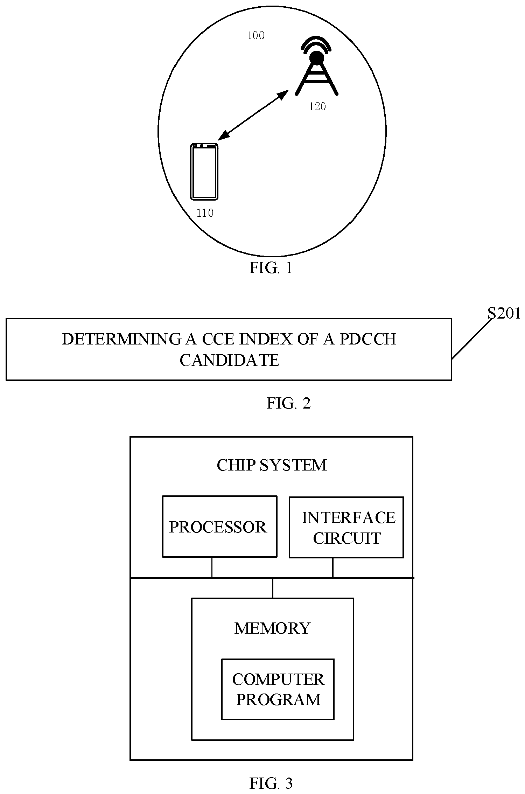

The technical solutions of implementations of the present disclosure can be applied to an exemplary communication system 100 as illustrated in FIG. 1. The exemplary communication system 100 includes a terminal 110 and a network device 120, where the terminal 110 is in communication connection with the network device 120.

The exemplary communication system 100 may be, for example, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a universal mobile telecommunication system (UMTS), a next-generation communication system or other communication systems.

Generally, a conventional communication system supports a limited number of connections and therefore is easy to implement. However, with development of communication technology, a mobile communication system not only supports conventional communication, but also supports, for example, device to device (D2D) communication, machine to machine (M2M) communication, machine type communication (MTC), and vehicle to vehicle (V2V) communication, etc. Implementations herein can also be applied to these communication systems. Optionally, a communication system in implementations of the present disclosure may be applied to a carrier aggregation (CA) scenario, a dual connectivity (DC) scenario, and a standalone (SA) network deployment scenario.

The terminal 110 in implementations of the present disclosure may refer to a user equipment, an access terminal, a subscriber unit (SU), a subscriber station, a mobile station, a remote station, a remote terminal, a mobile device, a user terminal, a terminal, a wireless communication device, a user agent, or a user apparatus. The terminal may also be a cellular telephone, a cordless telephone, a session initiation protocol (SIP) telephone, a wireless local loop (WLL) station, a personal digital assistant (PDA), a handheld device with wireless communication functions, a computing device, other processing devices connected with a wireless modem, a relay device, an in-vehicle device, a wearable device, a terminal in a future 5G network, a terminal in a future evolved public land mobile network (PLMN) ), or the like, which will not be limited herein.

The network device 120 in implementations of the present disclosure may be a device configured that is used to communicate with a terminal. The network device may be an evolved NodeB (eNB or an eNodeB) in an LTE system, or a wireless controller in a cloud radio access network (CRAN) scenario. The network device may also be a relay device, an access point (AP), an in-vehicle device, a wearable device, a network device in a future 5G network, a network device in a future evolved PLMN network, or one antenna panel or a group of antenna panels (including multiple antenna panels) in a base station in a 5G system. Alternatively, the network device also may be a network node constructing the next generation NodeB (gNB) or a transmission point (TP), such as a baseband unit (BBU) or a distributed unit (DU), which is not limited in implementations of the present disclosure.

In some deployments, the gNB may include a centralized unit (CU) and a DU. The gNB may also include an active antenna unit (AAU). The CU achieves a part of functions of the gNB, and the DU achieves a part of functions of the gNB. For example, the CU is responsible for processing non-real-time protocols and services, to achieve functions of a radio resource control (RRC) layer and a packet data convergence protocol (PDCP) layer. The DU is responsible for processing physical layer protocols and real-time services, to achieve functions of a radio link control (RLC) layer, a media access control (MAC) layer, and a physical (PHY) layer.

Generally, a search space set contains characteristics such as a monitoring occasion of a PDCCH and a type of a search space. The monitoring occasion of the PDCCH includes a monitoring offset and a monitoring period in a slot level, a starting symbol in a slot, etc. The search space set is generally bound with a control resource set (CORESET) and the CORESET collects characteristics such as a frequency domain resource and duration (the number of symbols) of a PDCCH. One PDCCH consists of one or more CCEs, and when one PDCCH consists of n CCEs, an aggregation level of the PDCCH is n. One CCE consists of 6 REGs, one REG is equal to one resource block (RB) in one orthogonal frequency division multiplexing (OFDM) symbol. REGs in one CORESET are numbered from small to large in a time-first manner, and number 0 corresponds to the first OFDM symbol and the lowest numbered RB in the CORESET. One CORESET is associated with one CCE-to-REG mapping, and the CCE-to-REG mapping for one CORESET may be interleaved or non-interleaved, and is described by REG bundles.

The remaining minimum system information (RMSI) in NR is equal to system information block 1 (SIB1) in LTE, and the RMSI includes main system information other than a master information block (MIB). The RMSI may also be referred to as SIB1. The RMSI is carried in the PDSCH which is scheduled by the PDCCH. The PDSCH carrying the RMSI is generally referred to as an RMSI PDSCH, and the PDCCH scheduling the RMSI PDSCH is generally referred to as an RMSI PDCCH.

A search space set where the RMSI PDCCH is located is generally referred to as Type 0-PDCCH search space set. Generally, the Type 0-PDCCH search space set may be configured by the MIB, or configured by the RRC in the case of handover. The Type 0-PDCCH search space set may be configured as search space 0 or search space set 0. The Type 0-PDCCH search space set may be bound with CORESET 0. Except for the search space set where the RMSI PDCCH is located, other common search space or common search space sets, such as a search space set of a OSI PDCCH (Type 0A-PDCCH search space), a search space set of a random access response (RAR) PDCCH (Type l-PDCCH search space), a search space set of a paging PDCCH (Type 2-PDCCH search space), etc., can be configured as search space set 0. These other common search space or common search space sets may be bound with CORESET 0. In general, the common search space and common search space sets can be reconfigured.

A monitoring occasion of the RMSI PDCCH is associated with a synchronization signal block. A UE obtains this association relationship according to an RMSI PDCCH monitoring occasion table. In an initial access process, the LTE finds a certain synchronization signal block, and the LTE determines, according to a row index of a table indicated by a physical broadcast channel (PBCH), a time domain location (a starting symbol index or a first symbol index) of the RMSI PDCCH associated with the synchronization signal block, so as to find the RMSI PDCCH, and receive and decode the RMSI PDSCH according to an RMSI PDCCH scheduling.

In NR, the LTE generally supports 100 MHz bandwidth. During initial access, the LTE blindly detects a primary synchronization signal (PSS)/ secondary synchronization signal (SSS)/ PBCH in the synchronization signal block, and obtains the MIB and time index information carried in the PBCH. The LTE obtains the configuration of a CORESET (which may be referred to as CORESET 0) scheduling the SIB1 and a search space set (which may be referred to as search space set 0) of the CORESET according to the MIB, and then the LTE can monitor Type 0-PDCCH scheduling the PDSCH carrying the SIB1, and decode the SIB1. Since the bandwidth of CORESET 0 is set through a table in the PBCH, the maximum bandwidth of CORESET 0 is implicitly defined in a protocol. In addition, the protocol specifies that frequency domain resources of the PDSCH carrying the SIB1 are within the bandwidth of CORESET 0 (PRBs) and therefore, the maximum bandwidth of the PDSCH carrying the SIB1 is also implicitly defined in the protocol. Actually, in an idle state, the UE operates in an initial active downlink bandwidth-part (initial active DL BWP), and a frequency domain location of the initial active DL BWP is the same as the frequency domain location of CORESET 0 by default. Not by default, the frequency domain location of the initial active downlink BWP can be modified by signaling to cover the frequency domain location of CORESET 0.

Reference can be made to FIG. 2, which illustrates a method for determining a CCE index. The method can be executed by a UE, and as illustrated in FIG. 2, the method includes the following operations.

At block S201, the LTE determines a CCE index of a PDCCH candidate.

Optionally, the LTE determines the CCE index of the PDCCH candidate according to the number of CCEs. In other words, the number of CCEs may be used to calculate the CCE index of the PDCCH candidate.

Optionally, the number of CCEs may be specifically the number of CCEs in one or more CORESETs. Details of the above number may be as follows. For example, for one CORESET, the number of CCEs may be the number of CCEs in one CORESET, and for multiple CORESETs, the number of CCEs may be the number of CCEs in the multiple CORESETs.

Optionally, the number of CCEs may be specifically the number of CCEs in one or more monitoring occasions. Details of the above number may be as follows. For example, for one monitoring occasion, the number of CCEs may be the number of CCEs in one monitoring occasion, and for multiple monitoring occasions, the number of CCEs may be the number of CCEs in multiple monitoring occasions.

Optionally, the number of CCEs may be specifically the number of CCEs in a CORESET(s) in one or more monitoring occasions. Details of the above number may be as follows. For example, for one monitoring occasion, the number of CCEs may be the number of CCEs in the CORESET(s) in one monitoring occasion, and for multiple monitoring occasions, the number of CCEs may be the number of CCEs in the CORESET(s) in multiple monitoring occasions.

Optionally, the number of CCEs may be specifically the number of CCEs in a CORESET(s) in one or more slots. Details of the above number may be as follows. For example, for one slot, the number of CCEs may be the number of CCEs in the CORESET(s) in one slot, and for multiple slots, the number of CCEs may be the number of CCEs in the CORESET(s) in multiple slots.

Optionally, the LTE determines the CCE index of the PDCCH candidate according to the number of PDCCH candidates. In other words, the number of PDCCH candidates may be used to calculate the CCE index of the PDCCH candidate.

Optionally, the number of the PDCCH candidates is a number of PDCCH candidates in one or more CORESETs. Details of the above number may be as follows. For one CORESET, the number of PDCCH candidates may be the number of PDCCH candidates in one CORESET, and for multiple CORESETs, the number of CCEs may be the number of PDCCH candidates in the multiple CORESETs.

Optionally, the number of PDCCH candidates is the number of PDCCH candidates in one or more monitoring occasions. Details of the above number may be as follows. For one monitoring occasion, the number of PDCCH candidates is the number of PDCCH candidates in one monitoring occasion, and for multiple monitoring occasions, the number of CCEs may be the number of PDCCH candidates in the multiple monitoring occasions.

Optionally, the number of PDCCH candidates is the number of PDCCH candidates in a CORESET(s) in one or more monitoring occasions. Details of the above number may be as follows. For one monitoring occasion, the number of PDCCH candidates may be the number of PDCCH candidates in the CORESET(s) on one monitoring occasions, and for multiple monitoring occasions, the number of CCEs may be the number of PDCCH candidates in the CORESET(s) in the multiple monitoring occasions.

Optionally, the number of PDCCH candidates is the number of PDCCH candidates in one or more slots. Details of the above number may be as follows. For one slot, the number of PDCCH candidates may be the number of PDCCH candidates in one slot, and for multiple slots, the number of CCEs may be the number of PDCCH candidates in the multiple slots.

### Implementation 1

In a technical solution provided by implementation 1 of the present disclosure, the LTE determines the CCE index of the PDCCH candidate according to the number of CCEs. The number of CCEs may be the number of CCEs in one or more CORESETs, and the number of CORESETs may be provided by a higher-layer parameter which may be carried in RRC signaling, and certainly, may also carried in other signaling such as medium access control (MAC) control element (CE) signaling.

In the technical solution provided by implementation 1 of the present disclosure, the CCEs may be from multiple CORESETs, so that the number of CCEs can be increased. With increase of the number of CCEs, or with concatenation or aggregation of resources of the multiple CORESETs, the number of CCEs in a CCE list can be increased, thereby expanding the coverage area of a PDCCH.

In another technical solution provided by implementation 1 of the present disclosure, the UE determines the CCE index of the PDCCH candidate according to the number of the PDCCH candidates. The number of PDCCH candidates is the number of PDCCH candidates in one or more CORESETs, and the number of CORESETs is provided by a higher-layer parameter.

In said another technical solution provided by implementation 1 of the present disclosure, the PDCCH candidates may be from multiple CORESETs, so that the number of PDCCH candidates can be increased. By increasing the number of PDCCH candidates, the coverage area of the PDCCH can be expanded.

### Implementation 2

In a technical solution provided by implementation 2 of the present disclosure, the LTE determines the CCE index of the PDCCH candidate according to the number of CCEs. The number of CCEs is the number of CCEs in one or more monitoring occasions, and the number of CORESETs is provided by a higher-layer parameter.

In the technical solution provided by implementation 2 of the present disclosure, the CCEs may be from multiple monitoring occasions. With increase of the number of CCEs, or with concatenation or aggregation of resources in the multiple monitoring occasions, the number of CCEs in the CCE list can be increased, thereby expanding the coverage area of the PDCCH.

In another technical solution provided by implementation 2 of the present disclosure, the UE determines the CCE index of the PDCCH candidate according to the number of the PDCCH candidates. The number of PDCCH candidates is the number of PDCCH candidates in one or more monitoring occasions, and the number of CORESETs is provided by a higher-layer parameter.

In another technical solution provided by implementation 2 of the present disclosure, the PDCCH candidates may come from multiple monitoring occasions, thus increasing the number of PDCCH candidates, and then expanding the coverage area of the PDCCH.

### Implementation 3

In the technical solution provided by implementation 3 of the present disclosure, the UE determines the CCE index of the PDCCH candidate according to the number of CCEs. The number of CCEs is the number of CCEs in a CORESET(s) in one or more monitoring occasions, and the number of CORESETs is provided by a higher-layer parameter.

In the technical solution provided by implementation 3 of the present disclosure, the CCEs may come from the CORESET(s) in the multiple monitoring occasions, and with increase of the number of CCEs, or concatenation or aggregation of resources of the CORESET(s) in multiple monitoring occasions, the number of CCEs in the CCE list can be increased, thereby expanding the coverage area of the PDCCH.

In another technical solution provided by implementation 3 of the present disclosure, the UE determines the CCE index of the PDCCH candidate according to the number of the PDCCH candidates. The number of PDCCH candidates is the number of PDCCH candidates in a CORESET(s) in one or more monitoring occasions, and the number of CORESETs is provided by a higher-layer parameter.

In said another technical solution provided by implementation 3 of the present disclosure, the PDCCH candidates may come from the CORESET(s) in multiple monitoring occasions, thus increasing the number of PDCCH candidates, and expanding the coverage area of the PDCCH.

### Implementation 4

In the technical solution provided by implementation 4 of the present disclosure, the UE determines the CCE index of the PDCCH candidate according to the number of CCEs. The number of CCEs is the number of CCEs in a CORESET(s) in one or more slots, and the number of CORESETs is provided by a higher-layer parameter.

In the technical solutions provided by implementation 4 of the present disclosure, the CCEs may come from the CORESET(s) in multiple slots, and with increase of the number of CCEs, or concatenation or aggregation of resources of the CORESET(s) in multiple slots, the number of CCEs in the CCE list can be increased, and the coverage area of the PDCCH can be expanded.

In another technical solution provided by implementation 4 of the present disclosure, the UE determines the CCE index of the PDCCH candidate according to the number of the PDCCH candidates. The number of PDCCH candidates is the number of PDCCH candidates in a CORESET(s) in one or more slots, and the number of CORESETs is provided by a higher-layer parameter.

In said another technical solution provided by implementation 4 of the present disclosure, the number of PDCCH candidates may come from the CORESET(s) in multiple slots, which increases the number of PDCCH candidates, thereby expanding the coverage area of the PDCCH.

A UE is further provided in implementations of the present disclosure. The UE is configured to determine a CCE index of a PDCCH.

Optionally, the UE is configured to determine the CCE index of the PDCCH candidate according to a number of CCEs.

Optionally, the number of CCEs is a number of CCEs in one or more CORESETs.

Optionally, the number of CCEs is a number of CCEs in one or more monitoring occasions.

Optionally, the number of CCEs is a number of CCEs in a CORESET in one or more monitoring occasions.

Optionally, the number of CCEs is a number of CCEs in a CORESET in one or more slots.

Optionally, the UE is configured to determine the CCE index of the PDCCH candidate according to a number of PDCCH candidates.

Optionally, the number of PDCCH candidates is a number of PDCCH candidates in one or more CORESETs.

Optionally, the number of PDCCH candidates is a number of PDCCH candidates in one or more monitoring occasions.

Optionally, the number of PDCCH candidates is a number of PDCCH candidates in a CORESET in one or more monitoring occasions.

Optionally, the number of PDCCH candidates is a number of PDCCH candidates in one or more slots.

Reference can be made to FIG. 3, which illustrates a chip system provided by implementations of the present disclosure. The chip system includes at least one processor, a memory, and an interface circuit. The memory, the transceiver, and the at least one processor are interconnected through a line. The at least one memory is configured to store a computer program which, when executed by the at least one processor, is operable with the at least one processor to implement the method as illustrated in FIG. 2.

A computer-readable storage medium is further provided in implementations of the present disclosure. The computer-readable storage medium stores a computer program. When the computer program is running on a user equipment, the method as illustrated in FIG. 2 can be implemented.

A computer program product is further provided in implementations of the present disclosure. When the computer program product is running on a terminal, the method as illustrated in FIG. 2 can be implemented.

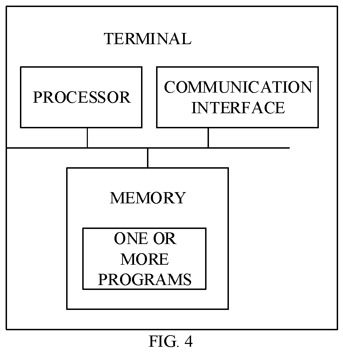

Reference can be made to FIG. 4, which illustrates a terminal provided by implementations of the present disclosure. The terminal includes a processor, a memory, a communication interface, and one or more programs. The one or more programs are stored in the memory and configured to be executed by the processor. The programs include instructions for executing operations of the method according to implementations as illustrated in FIG. 2.

The foregoing solution of the implementations of the disclosure is mainly described from the viewpoint of execution process of the method. It can be understood that, in order to implement the above functions, an electronic device includes hardware structures and/or software modules corresponding to the respective functions. Those skilled in the art should readily recognize that, in combination with the example units and scheme steps described in the implementations disclosed herein, the present disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementation should not be considered as beyond the scope of the present disclosure.

According to the implementations of the disclosure, functional units may be divided for the electronic device in accordance with the foregoing method examples. For example, each functional unit may be divided according to each function, and two or more functions may be integrated in one processing unit. The above-mentioned integrated unit can be implemented in the form of hardware or software functional units. It should be noted that the division of units in the implementations of the present disclosure is schematic, and is merely a logical function division, and there may be other division manners in actual implementation.

It is to be noted that, for the sake of simplicity, the foregoing method implementations are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the implementations described in the specification are exemplary implementations and the actions and modules involved are not necessarily essential to the present disclosure.

In the foregoing implementations, the description of each embodiment has its own emphasis. For the parts not described in detail in one embodiment, reference may be made to related descriptions in other implementations.

In the implementations of the disclosure, the apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various implementations of the present disclosure. The memory includes various medium capable of storing program codes, such as a USB (universal serial bus) flash disk, a read-only memory (ROM), a random-access memory (RAM), a removable hard disk, Disk, compact disc (CD), or the like.

It will be understood by those of ordinary skill in the art that all or a part of the various methods of the implementations described above may be accomplished by means of a program to instruct associated hardware, the program may be stored in a computer-readable memory, which may include a flash memory, a read-only memory (ROM), a random-access memory (RAM), Disk or compact disc (CD), and so on.

The implementations of the present disclosure are introduced in detail above, specific examples are used in the present disclosure to set forth the principle and implementations of the present disclosure, and the description of the above implementations is only used to help understand the method of the present disclosure and the core idea thereof. Meanwhile, the person of ordinary skill in the art may make modifications to specific implementations and application scope according to the idea of the present disclosure. In conclusion, the content of the description shall not be construed as a limitation to the present disclosure.

## Claims

1. A method for determining a control-channel-element (CCE) index, comprising: determining a CCE index of a physical downlink control channel (PDCCH) candidate.

2. The method according to claim 1, wherein the CCE index of the PDCCH candidate is determined according to a number of CCEs.

3. The method according to claim 2, wherein the number of CCEs is a number of CCEs in one or more control resource sets (CORESETs).

4. The method according to claim 2, wherein the number of CCEs is a number of CCEs in one or more monitoring occasions.

5. The method according to claim 2, wherein the number of CCEs is a number of CCEs in a CORESET in one or more monitoring occasions.

6. The method according to claim 2, wherein the number of CCEs is a number of CCEs in a CORESET in one or more slots.

7. The method according to claim 1, wherein the CCE index of the PDCCH candidate is determined according to a number of PDCCH candidates.

8. The method according to claim 7, wherein the number of PDCCH candidates is a number of PDCCH candidates in one or more CORESETs.

9. The method according to claim 7, wherein the number of PDCCH candidates is a number of PDCCH candidates in one or more monitoring occasions.

10. The method according to claim 7, wherein the number of PDCCH candidates is a number of PDCCH candidates in a CORESET in one or more monitoring occasions.

11. The method according to claim 7, wherein the number of PDCCH candidates is a number of PDCCH candidates in one or more slots.

12. A user equipment (LTE) configured to determine a control-channel-element (CCE) index of a physical downlink control channel (PDCCH) candidate.

13. The LTE according to claim 12, wherein the CCE index of the PDCCH candidate is determined according to a number of CCEs.

14. The LTE according to claim 13, wherein the number of CCEs is a number of CCEs in one or more control resource sets (CORESETs).

15. The LTE according to claim 13, wherein the number of CCEs is a number of CCEs in one or more monitoring occasions.

16. The LTE according to claim 13, wherein the number of CCEs is a number of CCEs in a CORESET in one or more monitoring occasions.

17. The LTE according to claim 13, wherein the number of CCEs is a number of CCEs in a CORESET in one or more slots.

18. The LTE according to claim 12, wherein the CCE index of the PDCCH candidate is determined according to a number of PDCCH candidates.

19. The LTE according to claim 18, wherein the number of PDCCH candidates is a number of PDCCH candidates in one or more CORESETs.

20. The LTE according to claim 18, wherein the number of PDCCH candidates is a number of PDCCH candidates in one or more monitoring occasions.

21. The LTE according to claim 18, wherein the number of PDCCH candidates is a number of PDCCH candidates in a CORESET in one or more monitoring occasions.

22. The LTE according to claim 18, wherein the number of PDCCH candidates is a number of PDCCH candidates in one or more slots.

23. A terminal, comprising a processor, a memory, a communication interface, and one or more programs, wherein the one or more programs are stored in the memory and configured to be executed by the processor, and the one or more programs comprise instructions for executing the method according to any of claims 1 to 11.

24. A chip system, comprising at least one processor, a memory, and an interface circuit, the memory, the transceiver, and the at least one processor being interconnected through a line, wherein the at least one memory is configured to store a computer program which, when executed by the at least one processor, is operable with the at least one processor to implement the method according to any of claims 1 to 11.

25. A computer-readable storage medium configured to store a computer program which, when running on a user equipment (LTE), is operable with the LTE to implement the method according to any of claims 1 to 11.

26. A computer program product comprising a non-transitory computer-readable storage medium configured to store a computer program, the computer program being operable with a computer to implement the method according to any of claims 1 to 11.

27. A network device configured to support a terminal to implement the method according to any of claims 1 to 11.
